# FASCICULE DE BREVET EUROPEEN

(11) **EP 3 286 417 B1**
(45) Date de publication et mention de la délivrance du brevet: **13.03.2019**
(21) Numéro de dépôt: 16719261.6
(22) Date de dépôt: 12.04.2016
(51) Int. Cl.: F02B 37/02, F02B 37/10, F02B 37/16

(54) **DISPOSITIF AMÉLIORÉ DE CONTRÔLE DE LA QUANTITÉ D'AIR INTRODUIT À L'ADMISSION D'UN MOTEUR À COMBUSTION INTERNE SURALIMENTÉ ET PROCÉDÉ UTILISANT UN TEL DISPOSITIF**
VERBESSERTE VORRICHTUNG ZUR STEUERUNG DER MENGE AN LUFT, DIE IN DEN EINLASS EINES AUFGELADENEN VERBRENNUNGSMOTORS GESPEIST WIRD, UND VERFAHREN ZUR VERWENDUNG SOLCH EINER VORRICHTUNG
IMPROVED DEVICE FOR CONTROLLING THE AMOUNT OF AIR FED INTO THE INTAKE OF A SUPERCHARGED INTERNAL COMBUSTION ENGINE AND METHOD USING SUCH A DEVICE

(30) Priorité: 21.04.2015 FR 1553538
(43) Date de publication de la demande: 28.02.2018
(73) Titulaire: IFP Energies nouvelles, 92500 Rueil-Malmaison (FR)
(72) Inventeur: COLLIOU, Thierry, 38138 Les Cotes d'Arey (FR); WALTER, Bruno, 69700 Chassagny (FR)
(74) Mandataire: IFP Energies nouvelles
(86) Numéro de dépôt international: PCT/EP2016/057985
(87) Numéro de publication internationale: WO 2016/169804

(56) Documents cités:
- EP-A2- 2 503 130
- WO-A1-2015/052837
- DE-A1- 2 438 162
- DE-A1- 2 906 182
- DE-A1-102012 202 857
- FR-A- 1 293 459
- GB-A- 2 438 360
- JP-A- S57 200 618

## Description

La présente invention se rapporte à un dispositif amélioré de contrôle de la quantité d'air introduit à l'admission d'un moteur à combustion interne suralimenté, notamment d'un moteur stationnaire ou pour un véhicule automobile ou industriel, et à un procédé de contrôle de la quantité d'air pour un tel moteur.

Le présent dispositif est spécifiquement modifié pour être miniaturisé et avoir un impact limité sur l'environnement du moteur et pour en améliorer le temps de réponse en fonctionnement transitoires.

Comme cela est largement connu, la puissance délivrée par un moteur à combustion interne est dépendante de la quantité d'air introduite dans la chambre de combustion de ce moteur, quantité d'air qui est elle-même proportionnelle à la densité de cet air.

Ainsi, il est habituel d'augmenter cette quantité d'air au moyen d'une compression de l'air extérieur avant qu'il ne soit admis dans cette chambre de combustion. Cette opération, appelée suralimentation, peut être réalisée par tous moyens, tel qu'un turbocompresseur ou un compresseur entraîné, qui peut être centrifuge ou volumétrique.

Dans le cas d'une suralimentation par un turbocompresseur, ce dernier comprend une turbine rotative, à simple flux ou à double flux, reliée par un axe à un compresseur rotatif. Les gaz d'échappement issus du moteur traversent la turbine qui est alors entrainée en rotation. Cette rotation est ensuite transmise au compresseur qui, de par sa rotation, comprime l'air extérieur avant qu'il ne soit introduit dans la chambre de combustion.

Comme cela est mieux décrit dans la demande de brevet français N° 2 478 736, il est prévu, pour pouvoir amplifier de manière significative cette quantité d'air comprimé dans la chambre de combustion du moteur, d'augmenter encore plus la compression de l'air extérieur par le compresseur.

Cela se réalise plus particulièrement en augmentant la vitesse de rotation de la turbine et donc du compresseur.

Pour cela, une partie de l'air comprimé sortant du compresseur est déviée pour être admis directement à l'entrée de la turbine en se mélangeant avec les gaz d'échappement. Cette turbine est alors traversée par une plus grande quantité de fluide (mélange d'air comprimé et de gaz d'échappement), ce qui permet d'augmenter la vitesse de rotation de la turbine et par conséquence du compresseur. Cette augmentation de vitesse du compresseur permet ainsi d'augmenter la pression de l'air extérieur qui sera comprimé dans ce compresseur puis introduit dans la chambre de combustion du moteur.

Par cela, l'air comprimé a une densité plus élevée ce qui permet d'accroitre la quantité d'air contenue dans la chambre de combustion.

Le document DE2906182 montre un moteur à combustion interne disposant d'un turbocompresseur et d'un conduit de transfert partiel afin d'acheminer une partie de l'air comprimé, en aval du compresseur, vers l'amont de la turbine.

Le document WO2015/052837A1 divulgue un moteur suralimenté comprenant un conduit de dérivation d'air intégré au carter du turbocompresseur.

Ce type de moteur comme défini ci-dessus, bien que donnant satisfaction, présente néanmoins des inconvénients non négligeables.

En effet, le débit de l'air comprimé qui est admis à l'entrée de la turbine n'est pas correctement contrôlé, ce qui peut entrainer un dysfonctionnent du moteur.

Ainsi, à titre d'exemple, en cas de trop grande quantité d'air comprimé déviée à l'entrée de la turbine, les gaz d'échappement entrant dans la turbine sont refroidis de manière trop importante par cet air et amène une diminution du rendement global de la suralimentation.

La présente invention se propose de remédier aux inconvénients mentionnés ci-dessus grâce à un dispositif de contrôle de la quantité d'air introduit à l'admission d'un moteur à combustion interne suralimenté qui permet de répondre à toutes les demandes de puissance du moteur.

L'invention ici présentée permet également de réaliser un transfert de l'air comprimé de l'admission vers l'échappement même quand la pression moyenne de l'air comprimé à l'admission est inférieure à celle des gaz à l'échappement. Il suffit uniquement qu'il existe des phases durant le cycle de fonctionnement du moteur où la pression à l'admission est supérieure à celle existant à l'échappement.

De plus, le présent dispositif est spécifiquement étudié pour être miniaturisé. La miniaturisation permet une intégration aisée du dispositif dans l'environnement d'un moteur puisqu'il est peu intrusif et limité au carter du turbocompresseur.

A cet effet, la présente invention concerne un dispositif de contrôle de la quantité d'air introduit à l'admission d'un moteur à combustion interne suralimenté, ledit moteur comprenant deux sorties de gaz d'échappement reliées chacune à un collecteur d'échappement d'un groupe d'au moins un cylindre, ledit dispositif comprenant un dispositif de suralimentation comportant un turbocompresseur avec une turbine à double entrée connectée auxdites sorties de gaz d'échappement ainsi qu'un compresseur d'air extérieur, et un conduit de transfert partiel de l'air comprimé du compresseur vers les entrées de la turbine, caractérisé en ce que le conduit transfert partiel comprend deux branches reliées aux entrées de la turbine et portant chacune des moyens de vannage contrôlant la circulation de l'air comprimé dans ces branches, et en ce que ledit conduit de transfert partiel est intégré au carter du turbocompresseur de façon être de courte longueur entre la sortie du compresseur et les entrées doubles de la turbine, et ainsi d'encombrement limité et de temps de réponse optimisé.

Le conduit de transfert partiel peut être disposé sur le carter du turbocompresseur.

Le conduit de transfert partiel peut être est aménagé dans le carter du turbocompresseur.

Les branches peuvent porter en outre chacune un clapet antiretour.

L'une des branches peut être reliée à l'autre des branches par une conduite de liaison.

La conduite de liaison peut porter des moyens de vannage.

Les moyens de vannage peuvent comprendre des vannes proportionnelles.

Le conduit de transfert peut être aménagé dans le carter du turbocompresseur à la fabrication en fonderie dudit carter ou lors d'un usinage spécifique.

L'invention concerne également un procédé de contrôle de la quantité d'air comprimé à l'admission d'un moteur à combustion interne suralimenté, ledit moteur comprenant deux sorties de gaz d'échappement reliées chacune à un collecteur d'échappement d'un groupe d'au moins un cylindre, ledit dispositif comprenant un dispositif de suralimentation avec un turbocompresseur avec une turbine à double entrée connectée auxdites sorties de gaz d'échappement ainsi qu'un compresseur d'air extérieur, et un conduit de transfert partiel de l'air comprimé du compresseur vers les entrées de la turbine, caractérisé en ce qu'il consiste à introduire une partie de l'air comprimé sortant du compresseur dans les sections d'entrées de gaz d'échappement de la turbine, et en ce que l'on intègre ledit conduit de transfert au carter du turbocompresseur.

Le procédé peut consister à séparer le conduit de transfert en deux branches et à contrôler la circulation de l'air comprimé dans chacune des branches par des moyens de vannage.

Le procédé peut consister à relier l'une des branches à l'autre des banches par un conduit de liaison.

Le conduit de transfert peut faire partie du carter et peut être fabriqué dans le même temps que la coulée en fonderie dudit carter.

Les autres caractéristiques et avantages de l'invention vont apparaître à la lecture de la description qui va suivre, donnée à titre uniquement illustratif et non limitatif, et à laquelle sont est annexées :
- la figure 1 qui illustre un moteur à combustion interne avec son dispositif de suralimentation selon l'invention ;
- la figure 2 qui montre une variante du moteur à combustion interne avec son dispositif de suralimentation et
- les figures 3a, 3b et 3c qui illustrent trois variantes du dispositif de suralimentation selon la figure 1 pour un moteur à combustion interne.

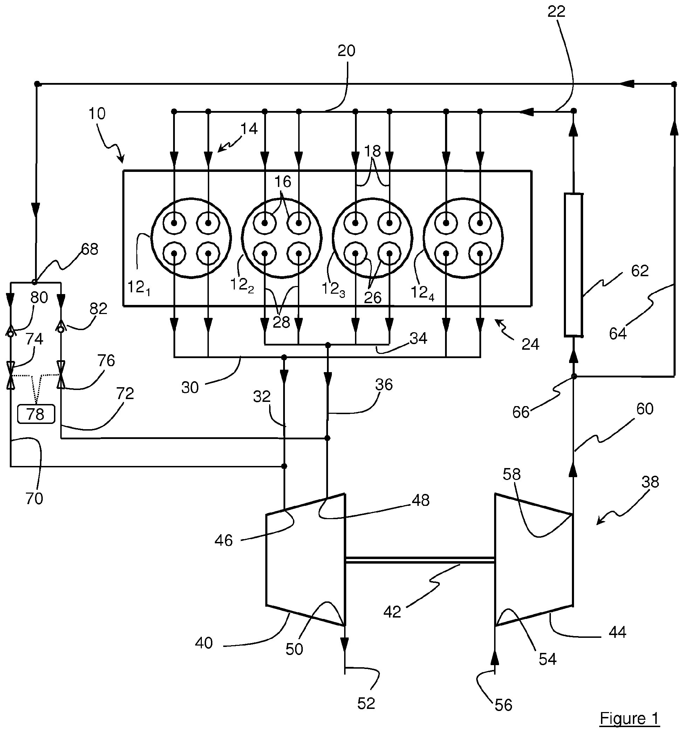

Sur la figure 1, le moteur à combustion interne 10 comprend au moins deux cylindres, ici quatre cylindres référencés 12₁ à 12₄ à partir de la gauche de la figure.

De manière préférentielle, ce moteur est un moteur à combustion interne à injection directe, notamment de type Diesel, mais cela n'écarte en aucune manière tout autre type de moteur à combustion interne.

Chaque cylindre comprend des moyens d'admission 14 avec au moins une soupape d'admission 16, ici deux soupapes d'admission contrôlant chacune une tubulure d'admission 18. Les tubulures d'admission 18 aboutissent à un collecteur d'admission 20 alimenté par un conduit d'alimentation 22 en air d'admission, tel que de l'air comprimé.

Ce cylindre comprend aussi des moyens d'échappement des gaz brûlés 24 avec au moins une soupape d'échappement 26, ici également deux soupapes contrôlant chacune une tubulure d'échappement 28.

Dans l'exemple illustré le moteur est prévu pour fonctionner selon un ordre de combustion dénommé 1-3-4-2. Compte tenu de cet ordre de combustion, les tubulures d'échappement du premier cylindre 12₁ et deuxième cylindre 12₄, qui forment un premier groupe d'au moins un cylindre, sont connectées à un premier collecteur d'échappement 30 avec une première sortie de gaz d'échappement 32. Les tubulures d'échappement du troisième et quatrième 12₂ et 12₃, qui forment un deuxième groupe d'au moins un cylindre, sont connectées à un deuxième collecteur d'échappement 34 qui comporte une deuxième sortie de gaz d'échappement 36.

Les deux sorties de gaz d'échappement aboutissent à un turbocompresseur 38 pour la compression de l'air et plus particulièrement à la turbine de détente 40 de ce turbocompresseur.

Comme illustré sur la figure 1, le turbocompresseur est un turbocompresseur à double entrée, plus connu sous le vocable de turbocompresseur "Twin Scroll".

Ce type de turbocompresseur comprend la turbine de détente 40 balayée par les gaz d'échappement et qui est reliée en rotation par un arbre 42 avec un compresseur 44.

Au niveau de la turbine, l'entrée des gaz d'échappement est divisée en deux sections, une première section d'entrée 46 raccordée à la première sortie de gaz d'échappement 32 du premier collecteur 30 et une deuxième section d'entrée 48 raccordée à la deuxième sortie de gaz d'échappement 36 du deuxième collecteur d'échappement 34.

L'évacuation de gaz 50 de la turbine 40 est raccordée conventionnellement à la ligne d'échappement 52 du moteur.

Le compresseur 44 du turbocompresseur 38 comporte une admission d'air extérieur 54 alimentée par une conduite d'alimentation 56. La sortie d'air comprimé 58 de ce compresseur est reliée au conduit d'alimentation 22 du collecteur d'admission 20 par une conduite 60.

Avantageusement, il peut être prévu de placer un radiateur de refroidissement de l'air comprimé 62 sur la conduite 60, entre le compresseur et la conduite 22.

Comme mieux visible sur la figure 1, un conduit de transfert 64 permet de faire circuler une partie de l'air comprimé sortant du compresseur 44 vers les entrées 46 et 48 de la turbine.

Plus précisément, ce conduit de transfert partiel prend naissance sur la conduite 60, à un point de d'intersection 66 entre le compresseur et le radiateur de refroidissement 62. Selon la présente invention, la conduite de transfert prend naissance très proche de la sortie d'air comprimé du compresseur 44. Cette conduite de transfert se sépare ensuite, à partir d'un point de bifurcation 68, en deux branches 70 et 72. La branche 70 aboutit à l'entrée 46 de la turbine par sa jonction avec la première sortie de gaz d'échappement 32 et la branche 72 aboutit à l'autre entrée 48 de cette turbine par sa jonction avec la sortie de gaz d'échappement 36.

Le conduit de transfert et ses branches sont les plus courtes possibles entre la sortie d'air comprimé du compresseur et les entrées 46 et 48 de la turbine. Ainsi, l'impact de l'implantation du dispositif de transfert partiel sur le moteur est limité à l'environnement immédiat du corps de l'ensemble turbocompresseur.

De préférence, lesdits conduits de transfert partiel sont disposés sur le carter du turbocompresseur et raccordés audits sortie/entrées. Dans cette variante, le carter du turbocompresseur n'est pas modifié, mais porte un élément qui se place sur le carter du turbocompresseur et qui est raccordé audites sortie/entrées. C'est dans cet élément que les conduits sont aménagés de façon à permettre l'implantation de vannes proportionnelles et de clapets anti-retour.

Chaque branche porte des moyens de vannage 74 et 76, comme une vanne proportionnelle, commandés par un moyen de commande 78, qui peut être commun aux deux moyens de vannage. Cette vanne permet ainsi de contrôler la circulation de l'air comprimé qui circule dans la branche.

Avantageusement, chaque branche comporte également un clapet anti-retour 80 et 82 qui interdit la circulation de l'air comprimé de la branche vers le compresseur tout en empêchant la mise en communication des deux branches.

Cette configuration permet ainsi, pendant le fonctionnement du moteur, de profiter des zones de basse pression échappement régnant ponctuellement dans les collecteurs d'échappement pour introduire directement de l'air comprimé dans la turbine et augmenter ainsi le débit de cette turbine et par conséquent du compresseur. Cela permet également d'avoir une suralimentation plus efficace pour les bas régimes.

Durant le fonctionnement, en cas de besoin d'air en grande quantité dans les cylindres, les vannes 74 et 76 sont commandées en ouverture pour introduire de l'air comprimé provenant du compresseur 44 dans la turbine 40.

L'air comprimé sortant du compresseur 44 circule dans le conduit 64 puis dans les branches 70 et 72 pour aboutir aux entrées de gaz d'échappement 46 et 48 de la turbine 40 en y apportant un surplus de fluide à cette turbine. La configuration présente qui impose des conduits courts permet des trajets rapides de l'air comprimé de balayage entre le compresseur et la turbine, et limite l'encombrement du dispositif dans l'environnement du moteur à l'environnement immédiat du carter du turbocompresseur et permettant aussi un temps de réponse plus rapide.

Ainsi, la turbine est parcourue non seulement par les gaz d'échappement venant des sorties 32 et 36, mais également par de l'air comprimé qui vient s'ajouter à ces gaz. De ce fait, la rotation de la turbine est augmentée, ce qui entraine une augmentation de rotation du compresseur et, en conséquence, une augmentation de la pression de l'air comprimée qui sort de ce compresseur.

Bien entendu, les vannes 74 et 76 sont contrôlées par le moyen de commande 78 de façon à admettre la quantité d'air comprimé dans la turbine qui répond aux besoins de suralimentation du moteur.

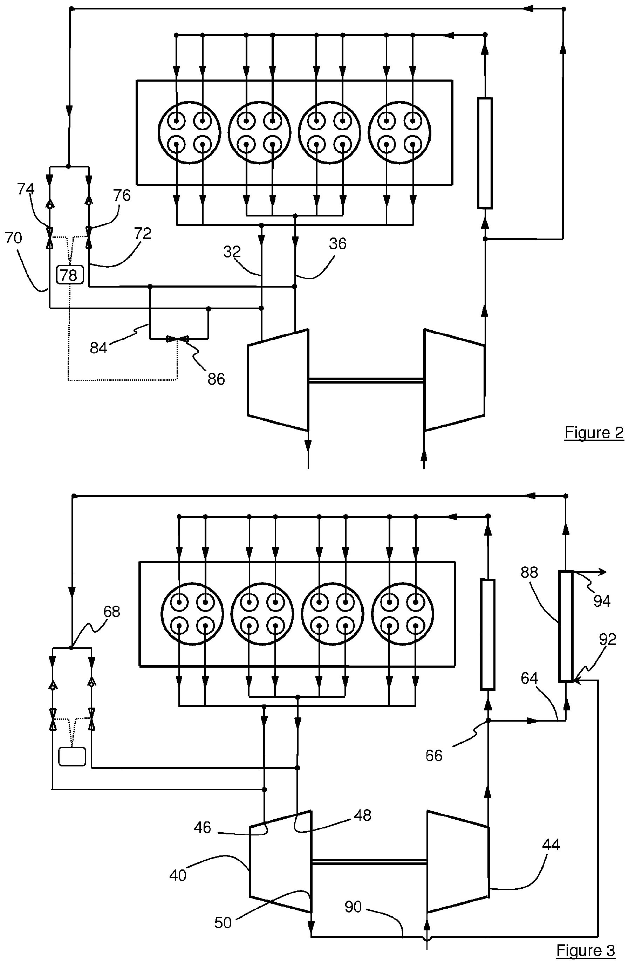

La variante de la figure 2 se distingue de la figure 1 par la mise en place d'une conduite de liaison 84 entre les deux branches 70 et 72. Cette conduite est munie de moyens de vannage 86, comme une vanne proportionnelle, qui, ici, est également commandée par le moyen de commande 78.

L'une des extrémités de cette conduite est reliée à la branche 70 en un point situé entre la vanne 74 et la sortie de gaz d'échappement 32 et l'autre des extrémités en un point situé entre la vanne 76 et la sortie de gaz d'échappement 36.

Cette conduite permet de contrôler la communication de fluide entre les deux branches arrivant à la turbine.

Plus précisément, cette conduite de liaison permet de dévier une partie de l'air comprimé circulant dans l'une des branches pour l'introduire dans l'autre des branches en se mélangeait avec les gaz d'échappement aux entrées de la turbine 40.

En outre, la conduite de liaison permet de ramener sur une branche de la turbine le différentiel de pression des gaz d'échappement (ou pulsatoire échappement) de l'autre branche qui est décalée angulairement dans le cycle de combustion du moteur.

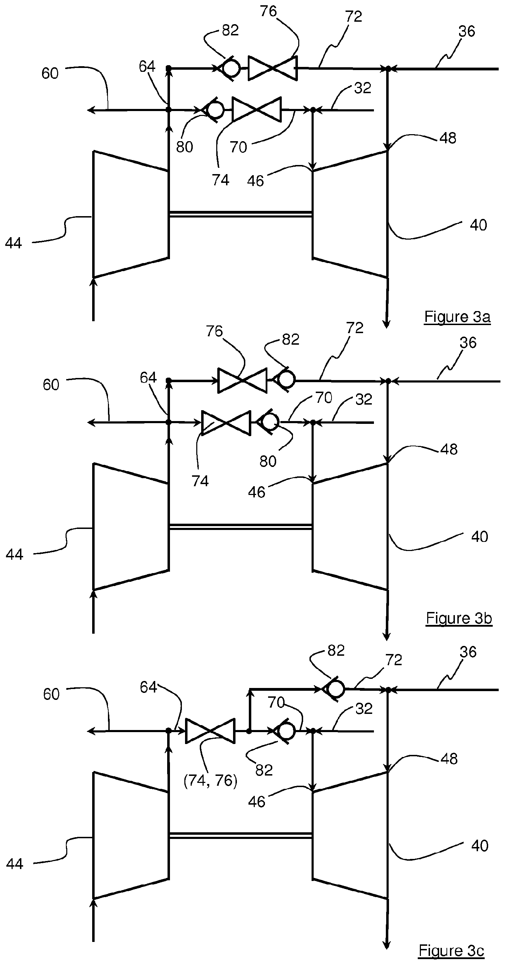

Les figures 3a, 3b et 3c décrivent plus précisément les variantes de disposition des éléments de contrôle dans le conduit court de transfert partiel de l'air comprimé.

La figure 3a montre les deux branches 70 et 72, qui balayent la turbine « twin scroll » 40 par ses deux entrées, équipées chacune d'un clapet anti-retour 80, 82 en amont des vannes proportionnelles 74, 76.

La figure 3b montre les deux branches 70 et 72, qui balayent la turbine « twin scroll » 40 par ses deux entrées, équipées chacune d'un clapet anti-retour 80, 82 en aval des vannes proportionnelles 74, 76.

La figure 3c montre les deux branches 70 et 72, qui balayent la turbine « twin scroll » 40 par ses deux entrées, équipées chacune d'un clapet anti-retour 80, 82 en aval d'une vanne proportionnelle unique 74, 76 disposée en amont sur le conduit 64 de transfert partiel d'air comprimé.

L'ensemble des conduits de transfert et ses équipements de contrôle sont intégrés au carter du turbocompresseur en étant soit placés sur ce carter, soit intégrés dans le corps de celui-ci de façon à avoir des longueurs courtes et peu, ou pas, d'impact d'encombrement sur l'environnement de la motorisation ainsi qu'un temps de réponse réduit.

Dans une variante, l'ensemble des conduits de transfert 64 et les deux branches 70 et 72 qui aboutissent aux deux entrées du turbocompresseur fait partie intégrante du carter du turbocompresseur. C'est-à-dire que lesdits conduits sortent à la même coulée de la fonderie du carter ou sont réalisés lors d'un usinage spécifique du carter.

L'invention impacte alors uniquement la conception et la fabrication du carter du turbocompresseur qui porte intégralement les conduits, les clapets et les vannes proportionnelles de contrôle.

L'encombrement du dispositif selon l'invention est alors limité au carter du turbocompresseur, sans impact sur l'environnement du moteur.

## Revendications

1. Dispositif de contrôle de la quantité d'air introduit à l'admission d'un moteur à combustion interne suralimenté, ledit moteur comprenant deux sorties de gaz d'échappement (32, 36) reliées chacune à un collecteur d'échappement (30, 34) d'un groupe d'au moins un cylindre (12₁, 12₂, 12₃, 12₄), ledit dispositif comprenant un dispositif de suralimentation (38) comportant un turbocompresseur avec une turbine (40) à double entrée (46, 48) connectée auxdites sorties de gaz d'échappement ainsi qu'un compresseur (44) d'air extérieur, et un conduit de transfert partiel (64) de l'air comprimé du compresseur vers les entrées de la turbine, **caractérisé en ce que** le conduit transfert partiel comprend deux branches (70, 72) reliées aux entrées de la turbine et portant chacune des moyens de vannage (74, 76) contrôlant la circulation de l'air comprimé dans ces branches, et **en ce que** ledit conduit de transfert partiel est intégré au carter du turbocompresseur de façon être de courte longueur entre la sortie du compresseur et les entrées doubles de la turbine, et ainsi d'encombrement limité et de temps de réponse optimisé.

2. Dispositif selon la revendication 1, **caractérisé en ce que** ledit conduit de transfert partiel est disposé sur le carter du turbocompresseur.

3. Dispositif selon la revendication 1, **caractérisé en ce que** ledit conduit de transfert partiel est aménagé dans le carter du turbocompresseur.

4. Dispositif selon l'une des revendications précédentes, **caractérisé en ce que** les branches portent en outre chacune un clapet antiretour (80, 82).

5. Dispositif selon l'une des revendications précédentes, caractérisé en que l'une (70) des branches est reliée à l'autre (72) des branches par une conduite de liaison (84).

6. Dispositif selon la revendication 5, caractérisé en que la conduite de liaison porte des moyens de vannage (86).

7. Dispositif selon l'une des revendications précédentes, caractérisé en que les moyens de vannage comprennent des vannes proportionnelles (74, 76; 86).

8. Dispositif selon l'une des revendications précédentes, caractérisé en que le conduit de transfert (64) est aménagé dans le carter du turbocompresseur à la fabrication en fonderie dudit carter ou, le cas échéant, lors d'un usinage spécifique.

9. Procédé de contrôle de la quantité d'air comprimé à l'admission d'un moteur à combustion interne suralimenté, ledit moteur comprenant deux sorties de gaz d'échappement (32, 36) reliées chacune à un collecteur d'échappement (30, 34) d'un groupe d'au moins un cylindre (12₁, 12₂, 12₃, 12₄), ledit dispositif comprenant un dispositif de suralimentation (38) avec un turbocompresseur avec une turbine (40) à double entrée (46, 48) connectée auxdites sorties de gaz d'échappement ainsi qu'un compresseur (44) d'air extérieur, et un conduit de transfert partiel (64) de l'air comprimé du compresseur vers les entrées de la turbine, **caractérisé en ce qu'**il consiste à séparer le conduit transfert partiel en deux branches (70, 72) reliées aux entrées de la turbine et portant chacune des moyens de vannage (74, 76) contrôlant la circulation de l'air comprimé dans ces branches pour introduire une partie de l'air comprimé sortant du compresseur dans les sections d'entrées (46, 48) de gaz d'échappement de la turbine (40), et **en ce que** l'on intègre ledit conduit de transfert au carter du turbocompresseur.

10. Procédé selon la revendication 9, **caractérisé en ce qu'**il consiste à relier l'une des branches à l'autre des branches par un conduit de liaison (84).

11. Procédé selon l'une des revendications 9 à 10, **caractérisé en ce que** ledit conduit de transfert fait partie du carter et **en ce qu'**il est fabriqué dans le même temps que la coulée en fonderie dudit carter.

## Patentansprüche

1. Vorrichtung zur Steuerung der Menge an Luft, die in das Ansaugrohr eines aufgeladenen Verbrennungsmotors eingebracht wird, wobei der Motor zwei Abgasauslässe (32, 36) umfasst, die jeweils mit einem Abgaskrümmer (30, 34) einer Gruppe mindestens eines Zylinders (12₁, 12₂, 12₃, 12₄) verbunden sind, wobei die Vorrichtung eine Aufladevorrichtung (38) umfasst, umfassend einen Turbokompressor mit einer Turbine (40) mit doppeltem Einlass (46, 48), die mit den Abgasauslässen sowie mit einem Kompressor (44) von Außenluft verbunden ist, und eine partielle Transferleitung (64) der komprimierten Luft des Kompressors zu den Einlässen der Turbine, **dadurch gekennzeichnet, dass** die partielle Transferleitung zwei Abzweigungen (70, 72) umfasst, die mit den Einlässen der Turbine verbunden sind und jeweils Ventilmittel (74, 76) tragen, welche die Zirkulation der komprimierten Luft in diesen Abzweigungen steuern, und dadurch, dass die partielle Transferleitung im Gehäuse des Turbokompressors integriert ist, um eine kurze Länge zwischen dem Auslass des Kompressors und den doppelten Einlässen der Turbine und somit einen begrenzten Platzbedarf und eine optimierte Ansprechzeit aufzuweisen.

2. Vorrichtung nach Anspruch 1, **dadurch gekennzeichnet, dass** die partielle Transferleitung auf dem Gehäuse des Turbokompressors angeordnet ist.

3. Vorrichtung nach Anspruch 1, **dadurch gekennzeichnet, dass** die partielle Transferleitung im Gehäuse des Turbokompressors aufgenommen ist.

4. Vorrichtung nach einem der vorhergehenden Ansprüche, **dadurch gekennzeichnet, dass** die Abzweigungen außerdem jeweils ein Rückschlagventil (80, 82) tragen.

5. Vorrichtung nach einem der vorhergehenden Ansprüche, **dadurch gekennzeichnet, dass** eine (70) der Abzweigungen mit der anderen (72) der Abzweigungen durch eine Verbindungsleitung (84) verbunden ist.

6. Vorrichtung nach Anspruch 5, **dadurch gekennzeichnet, dass** die Verbindungsleitung Ventilmittel (86) trägt.

7. Vorrichtung nach einem der vorhergehenden Ansprüche, **dadurch gekennzeichnet, dass** die Ventilmittel Proportionalventile (74, 76; 86) umfassen.

8. Vorrichtung nach einem der vorhergehenden Ansprüche, **dadurch gekennzeichnet, dass** die Transferleitung (64) im Gehäuse des Turbokompressors bei der Herstellung durch Gießen des Gehäuses oder gegebenenfalls bei einer spezifischen Bearbeitung aufgenommen wird.

9. Verfahren zur Steuerung der der Menge an komprimierter Luft im Ansaugrohr eines aufgeladenen Verbrennungsmotors, wobei der Motor zwei Abgasauslässe (32, 36) umfasst, die jeweils mit einem Abgaskrümmer (30, 34) einer Gruppe mindestens eines Zylinders (12₁, 12₂, 12₃, 12₄) verbunden sind, wobei die Vorrichtung eine Aufladevorrichtung (38) mit einem Turbokompressor mit einer Turbine (40) mit doppeltem Einlass (46, 48) umfasst, die mit den Abgasauslässen sowie mit einem Kompressor (44) von Außenluft verbunden ist, und eine partielle Transferleitung (64) der komprimierten Luft des Kompressors zu den Einlässen der Turbine, **dadurch gekennzeichnet, dass** dieses darin besteht, die partielle Transferleitung in zwei Abzweigungen (70, 72) zu trennen, die mit den Einlässen der Turbine verbunden sind und jeweils Ventilmittel (74, 76) tragen, welche die Zirkulation der komprimierten Luft in diesen Abzweigungen steuern, um einen Teil der komprimierten Luft, die aus dem Kompressor austritt, in die Einlasssektionen (46, 48) des Abgases der Turbine (40) einzubringen, und dadurch, dass die Transferleitung im Gehäuse des Turbokompressors integriert wird.

10. Verfahren nach Anspruch 9, **dadurch gekennzeichnet, dass** dieses darin besteht, eine der Abzweigungen mit der anderen der Abzweigungen durch eine Verbindungsleitung (84) zu verbinden.

11. Verfahren nach einem der Ansprüche 9 bis 10, **dadurch gekennzeichnet, dass** die Transferleitung einen Teil des Gehäuses bildet, und dadurch, dass diese zur selben Zeit wie das Gießen des Gehäuses hergestellt wird.

## Claims

1. A device for controlling the amount of air fed to the intake of a turbocharged internal-combustion engine, said engine comprising two exhaust gas outlets (32, 36) connected each to an exhaust manifold (30, 34) of a group of at least one cylinder (12₁, 12₂, 12₃, 12₄), said device comprising a turbocharging device (38) including a turbocharger with a dual-inlet (46, 48) turbine (40) connected to said exhaust gas outlets, as well as an outside air compressor (44), and a duct (64) for partial transfer of the compressed air from the compressor to the turbine inlets, **characterized in that** the partial transfer duct comprises two branches (70, 72) connected to the turbine inlets and carrying each throttling means (74, 76) controlling the circulation of the compressed air in these branches, and **in that** said partial transfer duct is integrated in the turbocharger housing so as to have a short length between the compressor outlet and the dual inlets of the turbine, thus providing compact size and optimized response time.

2. A device as claimed in claim 1, **characterized in that** said partial transfer duct is arranged on the turbocharger housing.

3. A device as claimed in claim 1, **characterized in that** said partial transfer duct is arranged in the turbocharger housing.

4. A device as claimed in any one of the previous claims, **characterized in that** the branches further carry each a non-return valve (80, 82).

5. A device as claimed in any one of the previous claims, **characterized in that** one (70) of the branches is connected to the other branch (72) by a connecting line (84).

6. A device as claimed in claim 5, **characterized in that** the connecting line carries throttling means (86).

7. A device as claimed in any one of the previous claims, **characterized in that** throttling means (74, 76; 86) comprise proportional valves.

8. A device as claimed in any one of the previous claims, **characterized in that** transfer duct (64) is arranged in the turbocharger housing upon manufacture in the foundry of said housing or, possibly, upon specific machining.

9. A method for controlling the amount of compressed air fed to the intake of a turbocharged internal-combustion engine, said engine comprising two exhaust gas outlets (32, 36) connected each to an exhaust manifold (30, 34) of a group of at least one cylinder (12₁, 12₂, 12₃, 12₄), said device comprising a turbocharging device (38) including a turbocharger with a dual-inlet (46, 48) turbine (40) connected to said exhaust gas outlets, as well as an outside air compressor (44), and a duct (64) for partial transfer of the compressed air from the compressor to the turbine inlets, **characterized in that** it consists in dividing the partial transfer duct into two branches (70, 72) connected to the turbine inlets and carrying each throttling means (74, 76) controlling the circulation of the compressed air in these branches, so as to feed part of the compressed air leaving the compressor into exhaust gas inlet sections (46, 48) of turbine (40), and **in that** said transfer duct is integrated in the turbocharger housing.

10. A method as claimed in claim 9, **characterized in that** it consists in connecting one of the branches to the other branch through a connecting line (84).

11. A method as claimed in any one of claims 9 to 10, **characterized in that** said transfer duct is part of the housing and **in that** it is manufactured simultaneously with the foundry casting of said housing.
